# EUROPEAN PATENT SPECIFICATION

(11) **EP 2 371 117 B1**
(45) Date of publication and mention of the grant of the patent: **27.11.2013**
(21) Application number: 09793511.8
(22) Date of filing: 11.12.2009
(51) Int. Cl.: H04M 7/00, H04M 3/22

(54) **GROUPING OF CIRCUITS**
GRUPPIEREN VON VERBINDUNGEN
REGROUPEMENT DE CIRCUITS

(30) Priority: 11.12.2008 US 121740 P
(43) Date of publication of application: 05.10.2011
(73) Proprietor: Telefonaktiebolaget L M Ericsson (publ), 164 83 Stockholm (SE)
(72) Inventor: MARTIN DE NICOLAS, Arturo, 52066 Aachen (DE); KAMPMANN, Dirk, NL-6291 GP Vaals (NL); SCHEURICH, Jan, 52072 Aachen (DE)
(74) Representative: Tonscheidt, Andreas
(86) International application number: PCT/EP2009/066968
(87) International publication number: WO 2010/066890

(56) References cited:
- US-A1- 2004 240 381
- US-A1- 2006 209 839
- US-A1- 2006 234 706

## Description

### Technical field

The invention relates to telecommunication, in particular to a method of communicating from a first node of a first telecommunications network towards a second node of a second telecommunications network, a method of communicating from a second node of a second telecommunications network towards a first node of a first telecommunications network, a first node of a first telecommunications network for communicating towards a second node of a second telecommunications network, and a second node of a second telecommunications network for communicating towards a first node of a first telecommunications network.

### Background

Time Division Multiplexing (TDM) connectivity is frequently used in today mobile networks (Public Land Mobile Network PLMN). In the following, examples of TDM usage are provided:
TDM is used between a call control node (CCN) and GSM EDGE Radio Access Network (GERAN), e.g. via an A-interface with Base Station Server Application Part (BSSAP) as protocol.
TDM is used between CCN nodes, e.g. ISUP is used as call control protocol.
TDM is used between a CCN and another network, e.g. ISUP is used as call control protocol.

It is common to all cases cited above that the CCN controls the usage of TDM circuits within the TDM connection. In a (layered architecture of a) soft-switch network, a CCN controls the usage of TDM circuits while the TDM device itself is owned in the controlled MGw (Media Gateway) node. In a non-layered network architecture, the CCN controls the usage and owns the TDM circuits. In (the layered architecture of the) soft-switch network, there is a functional split in a signaling plane which aims at control of the respective devices / resources / circuits involved in a call (seizure, release, etc ...) and in a user plane which aims at the transportation of the payload, i.e. voice or data.

TDM circuits are used to carry PCM (Pulse Code Modulation) encoded speech or data. TDM circuits are typically grouped according to certain schemes. These schemes are related to the HardWare (HW) equipment. For example in A-interface TDM circuits or in N-ISUP (narrowband ISUP) an E1 groups 32 64 Kbps TDM circuits or a T1 groups 24 64 Kbps TDM circuits.

A specific TDM circuit is seized at call setup and is released at the end of the call. In some special cases or in abnormal cases, TDM circuits shall be maintained independent from a call. Examples for these cases are a reset of one or more TDM circuits, a block or unblock of one or more TDM circuits, and a query of one or more TDM circuits (national use in ISUP).

In the following, it will be referred to BICC Circuits. The Bearer Independent Call Control (BICC) protocol is also used between CCNs when the user plane is transported over Asynchronous Transfer Mode (ATM) or Internet Protocol (IP).

Although with ATM and IP user plane there are no circuits statically associated to a device, BICC, in analogy to ISUP, also uses the concept of a logical circuit as the means by which two peer nodes can identify the same call. Thus, at call set up, a BICC circuit is used and the CCN releasing the call uses the circuit number to inform the peer CCN which call is to be released.

In the following, it will be referred to A-interface over IP.

Circuit identifications are also used when the A-interface is transported over IP.

In the following, the term "circuit" will be used to mean or denote both TDM circuits and logical circuits used on non-TDM interfaces.

In mono-processors nodes or single processor nodes, a node failure normally requires that all circuits controlled by the node are to be reset. This is not too problematic for the reasons presented in the following:

ISUP and BICC support a message to reset a group of consecutive circuits with a single message. Thus, up to 32 consecutive circuits can be reset in one message. Therefore only one reset message is needed to be send per PCM group in such a situation.

BSSMAP supports a global reset message. With a global reset of the peer node all circuits can be reset as well.

An MSC node (i.e. a CCN) may be based on a multi-processor platform comprehending a multitude of processing boards responsible for call processing. Each of the processing board can use circuits from the same pool. When, for example, one processing board fails, it (the processing board) may have to release all circuits that are used on the board.

This (releasing) cannot be done using Circuit Group Reset messages, as they (the messages) are sent by a mono-processor node and because the circuits to be reset will generally not be consecutive. Instead, circuits have to be reset individually, sending one message per circuit to the peer node.

The result is a tremendous high number of reset messages generated in the A-interface and respective (ISUP and BICC) links that can overload the receiving node.

Summarizing the forgoing description, operating on, for example resetting, circuits usable during a communication of nodes may result in an increased signaling between the nodes, thereby leading to a message overloading of the communication interface between the nodes.

The document US2006 209839 A1 describes setting up a group of virtual circuits using a single set up message request. In an embodiment, fewer than all of the virtual circuits in the group are immediately provisioned, and the remaining virtual circuits are placed in an inactive status by appropriate configuration of all the devices in the path of the group of virtual circuits. Each of the inactive virtual circuits can be activated (complete provisioning) as and when required. The bandwidth overhead on the networks is reduced as fewer signaling messages would be used in provisioning several virtual circuits. The parsing overhead is reduced on the devices processing the signaling messages as a result.

### SUMMARY

It is an object of the present invention to provide methods for communicating between a first node of a first telecommunication system and a second node of a second telecommunication system, first nodes, and communication systems that support reducing signaling via an interface between first and second nodes during communication.

The object is solved by the subject matter of the independent claims.

Preferred embodiments are defined by the dependent claims.

In the context of this application, the first and second telecommunications network may be identical to one another or may be different to one another, i.e. the first and second nodes may be part of the same telecommunications network or of different telecommunications networks.

In particular, the term "circuit" may particularly denote a common resource usable between first and second nodes during communicating with one another. In particular, a circuit may be a physical channel in a circuit switched communication (for example, a TDM circuit) or any type of call or session identifier used by both nodes to uniquely identify a call or session.

In particular, the term "group identifier" may particularly denote an (externally assigned) identification parameter which may be used for identifying a group of elements of an amount or set of elements. In particular, a group of elements may comprise at least one element or more elements or all elements of the amount of elements. In the context of the present application, the terms "group identifier" and "group identity" may be interchangeably used.

In particular, a group identifier identifying circuits usable during communicating between nodes may particularly denote a local group identifier (or a group identifier on a node level) which may be assigned or associated or selected or chosen by one of the nodes.

In particular, the terms "first node" and "second node" may be used in a mutually interchangeable way. A first node may be adapted to execute a method described in connection with the second node and a second node may be adapted to execute a method described in connection with the first node, namely the first node may be adapted for receiving a group identifier having been dynamically assigned to at least one circuit usable by the second node during communicating and storing the group identifier with respect to at least one circuit used during communicating and a second node may be adapted for assigning a group identifier to at least one circuit usable by the second node during communicating and sending the group identifier towards the first node. In particular, each one of the first and second nodes may be adapted for sending its own (local) group identifier, receiving and storing a received (remote) group identifier, and operating on information received together with the (remote) group identifier.

In particular, a second node may be a (another or a further) node of a (another or further) telecommunications network.

### Brief description of the drawings

Embodiments of the invention will be described in more detail hereinafter with reference to examples but to which the scope of the invention is not limited.

Fig. 1a is a flow diagram illustrating a method of communicating from a first node of a first telecommunications network towards a second node of a second telecommunications network according to an exemplary embodiment of the invention.

Fig. 1b is a flow diagram illustrating a method of communicating from a second node of a second telecommunications network towards a first node of a first telecommunications network according to another exemplary embodiment of the invention.

Figure 2 is block diagram illustrating further methods of communicating from a first node of a first telecommunications network towards a second node of a second telecommunications network and of communicating from a second node of a second telecommunications network towards a first node of a first telecommunications network according to another exemplary embodiments of the invention.

Figure 3 is a block diagram illustrating further methods of communicating from a first node of a first telecommunications network towards a second node of a second telecommunications network and of communicating from a second node of a second telecommunications network towards a first node of a first telecommunications network according to another exemplary embodiments of the invention.

Figure 4 is a block diagram illustrating further methods of communicating from a first node of a first telecommunications network towards a second node of a second telecommunications network and of communicating from a second node of a second telecommunications network towards a first node of a first telecommunications network according to another exemplary embodiments of the invention.

Fig. 5a is a block diagram illustrating a first node of a first telecommunications network for communicating towards a second node of a second telecommunications network according to an exemplary embodiment of the invention.

Fig. 5b is a block diagram illustrating a second node of a second telecommunications network for communicating towards a first node of a first telecommunications network according to an exemplary embodiment of the invention.

### Detailed description

The illustration in the drawing is schematic. In different drawings, similar or identical elements are provided with the same reference signs.

In the following, a basic concept of the teachings of the present application will be described.

In the present application, methods and corresponding nodes are proposed to dynamically assign a group identity to each circuit (e.g. TDM ISUP or BICC for IP or ATM based circuits), when it (the circuit) is assigned to a call and communicate that group identity to the peer node. In a Mobile Switching Center (MSC) comprehending a multitude of call processing boards the group identity may be specific for each processing board.

The group identity will be communicated to the other node (Node Y) in a first message originated by the node (Node X), for example in an ISUP or BICC IAM or BSSAP Assignment Request message. In both examples, a new parameter may be introduced. When considering the underlying communication protocol (ISUP, BICC, BSSAP), in the latter three examples, a new parameter may be introduced.

If, at some point, the Node X may detect an event that may trigger a resetting of all circuits within a group, Node X will send a reset message containing the respective group identity. The receiving node will scan all busy circuits and will only reset those busy circuits whose stored group identity matches the one received in the reset message.

In the following, an example will be described.

Each processing board in a multi-processor Mobile Switching Center Server (MSC-S) may code its board or processor ID into the circuit group identifier. When a board or processor fails, a reset message is then sent to the peer including the circuit group identifier of the failed board or processor.

It should be noted that the group identity only reflects a grouping scheme of the sending node, i.e. Node X. At the same time, Node Y may also be a multi-processor system that obviously assigns a different grouping scheme to its circuits.

The principle of group identity described above can be applied to any kind of logical signaling connection, for example, to connections established by Radio Access Application Part (RANAP) protocol or Session Initiation (SIP) protocol.

Although the teaching of the present application is described mainly with reference to TDM circuits, the teaching or the present application is likewise applicable to any other circuits such as IP or ATM based circuits and their respective signaling control protocols, such as ISUP for TDM circuits, BSSMAP for TDM or IP circuits, BICC for IP or ATM based circuits, RANAP for IP or ATM based circuits, and SIP for IP based circuits.

Hence, in generality, any protocol suited for handling user plane circuits, for example the above mentioned TDM, IP or ATM based circuits, may be subject to the present application.

Furthermore, although addressed in the following with respect to a board or processor, the idea in its generality can also be applied to a single core in the case of a multi-core processor being employed. I.e. when referring in the following to a processor, it is envisaged that the processor may even be a single core of a multi-core processor.

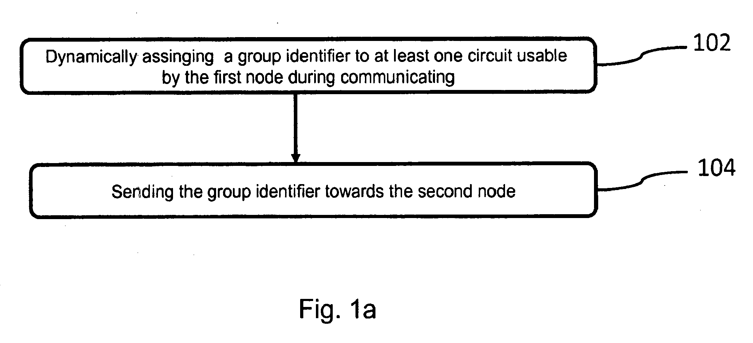

Referring to Fig. 1a, a method of communicating from a first node of a first telecommunications network communication towards a second node of a second telecommunications network according to an exemplary embodiment of the invention will be described in more detail.

The method is executed by the first node and comprises dynamically assigning 102 a group identifier to at least one circuit usable by the first node during communicating and sending 104 the group identifier towards the second node.

Dynamically assigning may comprise dynamically assigning the group identifier to at least one of a circuit and more circuits usable by the first node during communicating.

The method may further comprise receiving an acknowledgement that the group identifier has been stored by the second node with respect to at least one circuit used during communicating. In particular, an acknowledgement may be received in a first backward message during a call or session set up using, for example, an Address Complete Message (ACM), a Call Progress Information (CPG), an Answer Message (ANM), a BSSMAP Assignment Complete message, a RAB Assignment Response message, a Trying message or a Session Progress message.

The method may further comprise sending information together with the group identifier towards the second node.

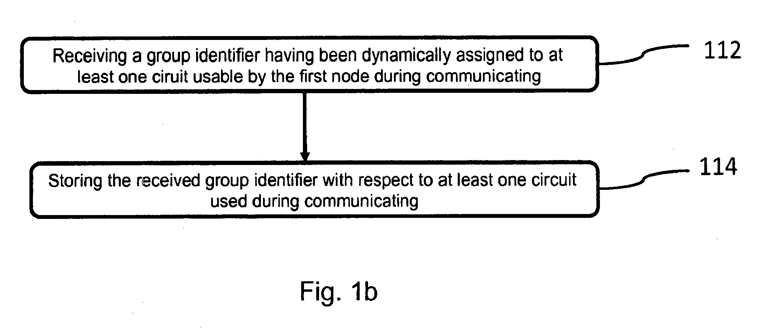

Referring to Fig. 1b, a method of communicating from a second node of a second telecommunications network communication towards a first node of a first telecommunications network according to an exemplary embodiment of the invention will be described in more detail.

The method is executed by the second node and comprises receiving 112 a group identifier having been dynamically assigned to at least one circuit usable by the first node during communicating and storing 114 the received group identifier with respect to at least one circuit used during communicating.

In particular, in case more than one circuit may be seized or established between the first and second nodes when communicating, the received group identifier may be stored with respect to each one of the seized circuits.

The method may further comprise sending an acknowledgement that the group identifier has been stored by the second node with respect to at least one circuit used during communicating.

Storing may comprise storing an association between the group identifier and at least one circuit identifier for identifying the at least one circuit used during communicating. In particular, for each circuit when communicating between the first and second nodes, an association between the group identifier and particular circuit identifier for identifying the particular circuit used may be stored. Storing may comprise using at least one of a list, a list of associations, and a linked list.

The method may further comprise receiving information together with the group identifier and operating on the received information and the received group identifier.

Operating may comprise scanning the circuits used by the second node during communicating and releasing the circuits whose stored group identifier matches to the group identifier received together with the information.

Sending and receiving the group identifier may comprise sending and receiving the group identifier together with the at least one circuit identifier.

The following description may refer at least one of the methods illustrated in Fig. 1a and 1b.

Sending and receiving the group identifier may comprise incorporating the group identifier into a message which may comprise an Initial Address Message (IAM), a BSSMAP Assignment Request message, a RAB Assignment Request, an INVITE message or a first backward message.

The first backward message may comprise an Address Complete Message (ACM), a Call Progress Information (CPG), an Answer Message (ANM), a BSSMAP Assignment Complete message, a RAB Assignment Response message, a Trying message or a Session Progress message.

The information may comprise a circuit resetting information, a circuit blocking information, or a circuit querying information. In particular, the information may be transmitted in a circuit reset message, circuit blocking message, and circuit querying message.

In particular, the information may be associated with at least one circuit usable by the first node towards the second node when communicating.

In particular, a circuit resetting information may comprise information to reset at least one circuit, particularly to reset a single circuit or a group of circuits. In particular, when considering ISUP and BICC, a RESET CIRCUIT - RSC message may be used to reset a single circuit or a CIRCUIT GROUP RESET - GRS message may be used to reset a group of circuits. The (new) group identifier may be added to each one of the messages, particularly to the CIRCUIT GROUP RESET - GRS.

In particular, a circuit blocking information may comprise information to block at least one circuit, particularly to block a single circuit or a group of circuits. In particular, a BLOCKING - BLO message may be used to block a single circuit and a CIRCUIT GROUP BLOCKING (CGB) message may be used to block a group of circuits.

In particular, a circuit querying information may comprise information to query a group of circuits using a CIRCUIT GROUP QUERY - CQM message.

The circuit identifier may comprise a Call Identifier (CI), a Circuit Identification Code (CIC), a Call Instance Code (CIC), a session name, or an Iu signaling connection identifier.

The sending and the receiving may be based on an ISDN User Part (ISUP) Protocol, a Base Station System Application Part (BSSAP) Protocol, a Bearer Independent Call Control (BICC) Protocol, a Radio Access Network Application Part (RANAP) Protocol, or a Session Initiation Protocol (SIP).

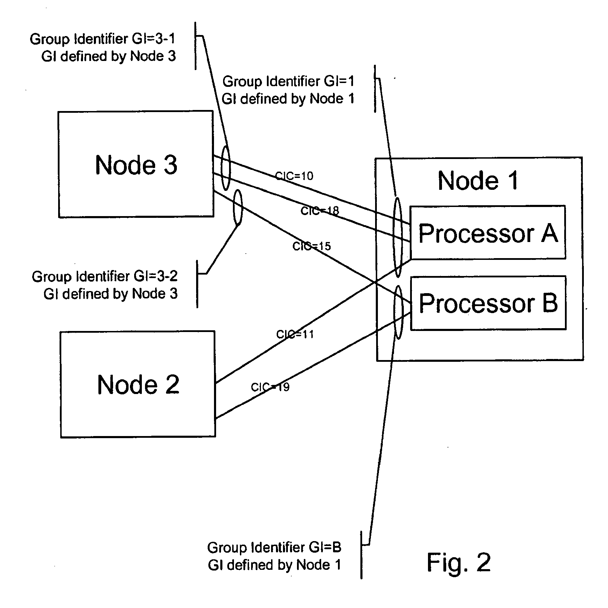

Referring to Fig. 2, methods of communicating from a first node of a first telecommunications network towards a second node of a second telecommunications network and of communicating from a second node of a second telecommunications network towards a first node of a first telecommunications network according to another exemplary embodiments of the invention will be described.

A node 1 comprises processors or processing boards A and B. The node 1 is in communication with nodes 2 and 3. In the embodiment illustrated in Fig. 2, the node 1 is adapted as a Mobile Switching Center (MSC) Server, and the nodes 2 and 3 are adapted as further Mobile Switching Center (MSC) Severs. The telecommunications protocol underlying the illustrated communications architecture is based on ISUP.

Each circuit usable by the nodes 1, 2, and 3 for communicating towards peer nodes are defined by a common call identifier code CIC. For example, circuits usable by the processor A of the node 1 and the node 3 are denoted by CIC=10 and CIC= 18. A circuit usable by the processor B of the node 1 and the node 3 is denoted by CIC=15. A circuit usable by the processor A of the node 1 and the node 2 and a circuit usable by the processor B of the node 1 and the node 2 are denoted by CIC=11 and CIC= 19, respectively.

Each one of the nodes 1, 2, and 3 defines for internal processing a dedicated grouping of circuits and associates at least one circuit with a group identifier GI. In the embodiment illustrated in Fig. 2, the node 1 defines a local group identifier GI=1 which is associated to all circuits used by processor A, namely to the circuits identified by CIC=10, CIC=11 and CIC=18. Further, the node 1 defines a further group identifier GI=B which is associated to all circuits used by processor B, namely to the circuits identified by CIC=15 and CIC=19. The node 3 defines a group identifier GI=3-1 which is assigned to the circuits usable towards the node 1, namely the circuits identified by CIC= 10 and CIC=18. Further, the node 3 defines a group identifier GI=3-2 which is associated to the circuit usable towards the node 1 and is identified by CIC=15.

The node which has locally or internally defined the group identifier sends the group identifier together with the CIC to the peer nodes. The node which has received the group identifier and the CIC stores a relation or association between the group identifier and the CIC for each circuit that has been established. In case multiple circuits are seized between nodes, the node which has received the group identifier stores the group identifier-CIC information for each circuit. In the embodiment illustrated in Fig. 2, three circuits are seized between the node 1 and the node 3, wherein the circuits are identified by CIC=10, CIC=18, and CIC=15. The node 3 stores the group identifier - CIC association in that the following associations will be stored: CIC=10 - GI=1; CIC=18 - GI-1; and CIC=15 - GI-B.

In case a node intends the peer node operating on all circuits within the circuit group, the node has to send its own circuit group identifier. The peer node receiving the group identifier of the node sending the group identifier will operate on all circuits which the node has stored together with the received (remote) group identifier.

Referring to the processor A of the node 1 and the node 3, a call set up will be described in more detail.

The processor A of the node 1 selects a circuit for a new call, wherein the circuit is identified by CIC = 10. The processor A then associates the CIC=10 to a local group identifier, in the particular case to the group identifier GI=1. Then the processor A sends the CIC=10 and the local GI=1 in a call setup message (e.g., an ISUP IAM message) to the node 3. Next, the node 3 stores the CIC and GI received from the node 1. Then, the node 3 associates the CIC=10 with a locally generated group identifier, namely the GI=3-1. The node 3 sends the local GI=3-1 in a first backward message such as ISUP ACM to the node 1. The node 1 receives and stores the GI generated by the node 3.

In the following, a restart of the processor A of the node 1 will be described.

When the processor A of the node 1 restarts, the node 1 sends RESET messages, one to each peer node. Each message includes a group identifier that identifies all circuits which are currently used by the processor A in communicating towards the peer end. The nodes 2 and 3 then release only the circuits for which a group identifier was received in the reset messages. For example, upon receiving the group identifier GI=1, the node 3 releases the circuits identified by CIC=10 and CIC=18. The node 2 releases the circuit identified by CIC=11.

In the following, a restart of the processor A of the node 1 will be described in more detail.

If a restart is required in the processor A, all circuits towards the processor A have to be reset. The node 1 sends a RESET message to the node 2 with a GI=1. The node 2 then scans all circuits associated with the Node 1 and the group identifier GI=1 and releases these circuits.

In the following, a restart of the node 3 with partial impacts on circuits established towards the node 1 will be described in more detail.

The node 3 decides to reset all circuits belonging to GI=3-1 (it is not necessary for the node 1 to know the reason for the reset of the node 3). A RESET message is sent to the node 1 comprising the GI=3-1 and all processors of the node 1 reset all circuits associated with the node 3 and the Group GI=3-1.

In the following, a method according to another exemplary embodiment of the invention will be described.

A telecommunication node A may communicate to another telecommunication node B (in the same or another telecommunications network). The communication may be limited in time (for example, the communication may be part of a transaction or may be a communication session) and may involve a "circuit" (or any similar common resource) which may be identified by a common identifier (for example, a CIC) in both nodes A and B.

The circuit may be chosen, particularly selected or assigned, by one of the nodes A and B, i.e. either by the node A or the node B, and then the chosen circuit may be acknowledged by the another node. The circuit may be locally associated with a dynamic group identifier (GI) on the node A (denoted in the following by "GI A"), on the node B (denoted in the following by "GI B") or on both nodes A and B. Each local group identifier may relate to a (partial) failure domain in the node A and the node B, respectively. The group identifier may be sent to the another node as part of a communication in the session.

When the node B may receive GI A from node A, the node B may associate the GI A with the CIC as remote GI and acknowledges the reception of GI A to the node A. This applies vice versa for the node A and the GI B.

When the communication session may end normally, both of the nodes may remove the association of the local and remote GIs, if any, from the CIC.

In case of a partial failure of the node A, the node A may send a message to the node B, in order to inform the node B that all sessions involving circuits associated with GI A of the failed component as remote GI may be to be cleared or reset. This applies vice versa for the node B.

The node B may, at a reception of the above described group clear message, terminate all sessions involving circuits associated with the received GI A as remote GI. This applies vice versa for the node A.

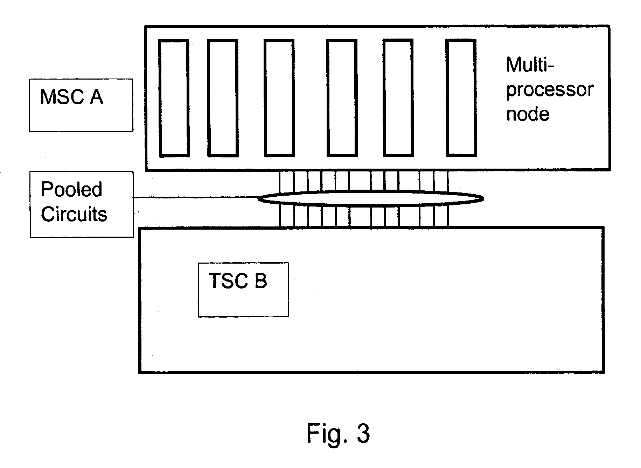

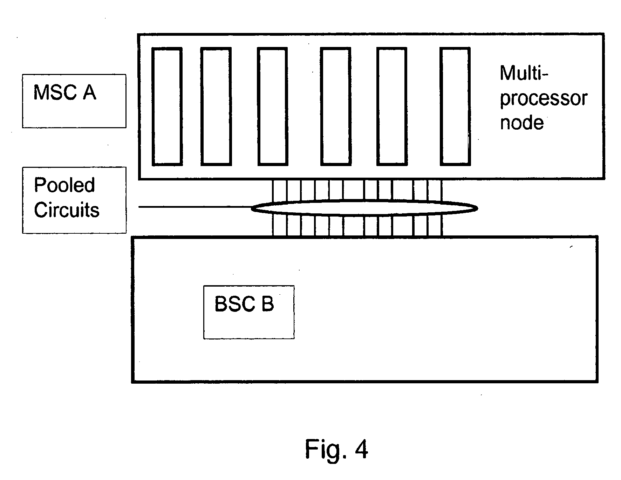

Referring to Fig. 3 and 4, the following discussion assumes an MSC-S (MSC-Server, i.e. CCN in a soft-switch network) multi-processor board node as an example of a system using a circuit group identifier. Furthermore, the situation of a board or processor restart will be discussed. However, usage of a circuit group identifier is not limited to this scenario. Grouping of circuits could be used for any purpose where an operator sees some commonality between specific circuits. Further a circuit group identifier can be used as well for circuit blocking messages or query messages.

Figure 3 shows a multi-processor based node, which is also referred to as a MSC server (MSC-S) or as a MSC A in the following figure.

Circuits may be pooled for all boards / processors, i.e. there are no circuits statically assigned or reserved for each board / processor, but each board or processor in need of a circuit gets a circuit during a call establishment phase and frees it at call release.

The teachings of the invention comprise the following procedures:
If (the) MSC A initiates a call towards another node using a respective protocol such as ISUP, it (the MSC A) sends along a Group Identity, e.g. included in the Initial Address Message IAM message.
If the call was initiated by the another node (a Transit Switching Center TSC B in Figure 3), (the) MSC A sends along a Group Identity, e.g. included in the first backward message (Address Complete Message ACM, Call Progress Information CPG, Answer Message ANM).

In this scenario, a group identity would at least reflect the board or processor which is using the circuit. However, the receiving node needs not to be aware of any structure of this Group identity.

A node ((the) MSC A) receiving a message, such as an IAM message, including a Group Identity shall store the received Group Identity with respect to the Circuit e.g. in a Group Identity- CIC (Circuit Identification Code) association, which association shall be stored until the circuit is released. It (the MSC A) can also acknowledge the another node in a backward message, e.g. the first backward message, that the information has been stored, e.g. by using a new IE Group Identity Acknowledgment.

A node (a Transit Switching Center TSC B) receiving a message, such as an ACM, CPG or ANM message, including the Group Identity shall store the received Group Identity with respect to the Circuit e.g. in a Group Identity - CIC (Circuit Identification Code) association, which association shall be stored until the circuit is released. It can also acknowledge the other node in a message, such as a dedicated INF ISUP message, that the information has been stored, e.g. by using a new IE Group Identity Acknowledgment. Alternatively and depending on the call case, the information could be included alternatively in a COT message.

If a board or processor in (the) MSC A undergoes a restart, (the) MSC A shall send an ISUP reset message containing a Group Identity which identifies the restarting board or processor by means of the Group Identity.

The node receiving the Reset with the Group Identity shall scan all circuits used towards (the) MSC A and shall initiate a reset of those whose group identity matches to the group identity received in the reset message.

(The) MSC A may still send individual reset messages for those circuits for which no acknowledgement was received from (the) TSC B during call set up indicating the TSC B had stored the Group Identity - CIC association.

(The) MSC A shall handle the Group Identities received by the peer node in the same way as described above for (the) TSC B.

Likewise, Figure 4 shows a multi-processor based node, i.e. a MSC A in the Figure, and another node, in this case an exemplary Base Station Controller BSC node.

There, the teachings of the invention comprise the following procedures:
If MSC A initiates a call towards a BSC, it shall send along a Group Identity, e.g. included in the BSSMAP Assignment Request message.

In this embodiment, the group identity would reflect at least the board or processor which is using the circuit. However, the receiving node needs not to be aware of any structure of the Group identity.

A BSC node receiving a message, such as an Assignment Request, including the Group Identity shall store the Group Identity with respect to the Circuit e.g. in a Group Identity - CIC (Circuit Identification Code) association, which shall be stored until the circuit is released. It (the BSC node) can also acknowledge the other node in a message, such as Assignment Complete message, that the information has been stored, e.g. by using a new IE Group Identity Acknowledgment.

If a board or processor in (the) MSC A undergoes a restart, (the) MSC A shall send a BSSMAP reset message containing a Group Identity which identifies the restarting board or processor by means of the Group Identity.

The node receiving the Reset with the Group Identity shall scan all circuits used towards (the) MSC A and shall initiate a reset of those whose group identity matches to the Group Identity received in the reset message.

(The) MSC A may still send individual reset messages for those circuits for which no acknowledgement was received from BSC B during call set up indicating the BSC B had stored the Group Identity - CIC association.

It is assumed that the MSC is always the node sending the Assignment Request message. However, it is also possible for the BSC to send an Assignment Request. Thus the following two procedures are also part of the teachings of the invention:
An MSC A receiving an Assignment Request from a BSC shall include a Group Identity in the Assignment Complete message.

A circuit may be identified by the MSC A. The MSC A may send a BSSAP Assignment Request message including the group identifier and the CIC. The BSC may reply with an Assignment Complete Message.

A circuit may be identified by a BSC. A MSC A may send a BSSAP Assignment Request message including the group identifier. The BSC may reply with an Assignment Complete message including a CIC.

A MSC A may generate the group identifier without knowing the CIC yet. The MSC A may send the group identifier along in a BSSMAP Assignment Request message. The BSC may accept the group identifier, may create a CIC, and may store a group identifier - CIC relation. A BSC may indicate in a backward message that the group identifier - CIC association has been stored. The MSC A may receive the CIC in a BSSMAP Assignment Complete Message and may associate the CIC and the group identifier.

A BSC receiving the Group Identity along or in the Assignment Request message shall acknowledge it, e.g. in a dedicated and new BSSMAP message using a new IE Group Identity Acknowledgment.

Further, the handling of group identity can be expanded to a handling of call instance code (CIC) in BICC as well as Iu Signaling Connection Identifier in RANAP. Further, it (the handling of group identity) can be applied to the Call Identifier used in A over IP signaling.

Further, the use of circuit groups can be expanded to the SIP protocol, where a session is dynamically assigned a circuit group code. Thereafter a circuit group code may be used in a SIP message to terminate a multitude of sessions affected by one processor failure.

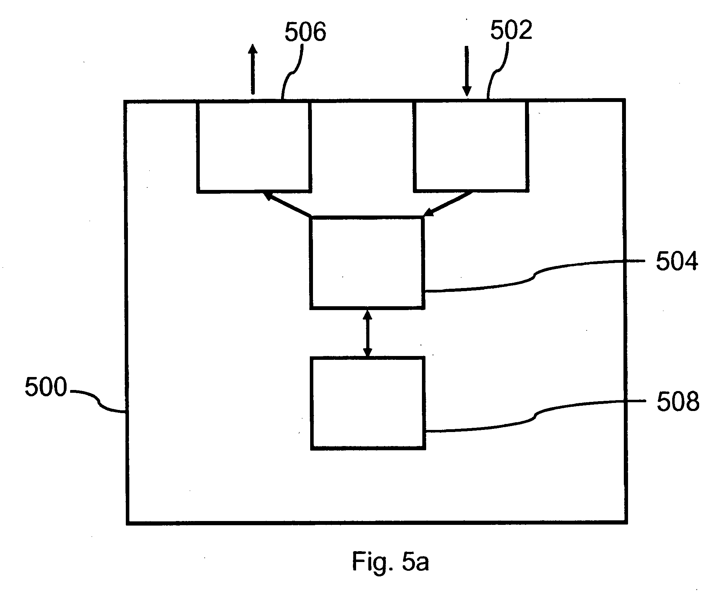

Referring to Fig. 5a, a first node 500 of a first telecommunications network for communicating towards a second node of a second telecommunications network will be described in the following.

The first node 500 comprises an assigning unit 504 adapted for dynamically assigning a group identifier to at least one circuit usable by the first node during communicating and a sending unit 506 adapted for sending the group identifier towards the second node.

The assigning unit 504 may at least partially form part of a processor or a processing unit in which appropriate algorithms may be executed to perform the methods of communicating from a first node 500 of a first telecommunications network towards a second node of a second telecommunications network and of communicating from a second node of a second telecommunications network towards a first node 500 of a first telecommunications network according to exemplary embodiments of the invention as described above.

The first node 500 may comprise a receiving unit 502 for receiving information, particularly a group identifier having been dynamically assigned to at least one circuit usable the second node during communicating.

The sending unit 506 may be adapted for sending information together with the group identifier towards the second node.

The first node 500 may comprise a storing unit 508 adapted for storing data necessary during methods of communicating from a first node 500 of a first telecommunications network towards a second node of a second telecommunications network and of communicating from a second node of a second telecommunications network towards a first node 500 of a first telecommunications network according to exemplary embodiments of the invention as described above.

The first node 500 may be adapted to execute methods of communicating from a first node 500 of a first telecommunications network towards a second node of a second telecommunications network and of communicating from a second node of a second telecommunications network towards a first node 500 of a first telecommunications network according to exemplary embodiments of the invention as described.

In particular, the receiving unit 502 may be adapted for receiving a group identifier having being dynamically assigned to at least one circuit usable by the second node during communicating and the storing unit 508 may be adapted for storing the received group identifier with respect to at least one circuit used during communicating.

The first node 500 may be a call initiating node or a call recipient node. The first node 500 may be adapted as a Mobile Switching Center Server (MSC-S), a Transit Switch Center, a Base Station Controller, a Gateway Mobile Switching Center Server (GMSC), a Media Gateway Control Function (MGCF), or a Radio Network Controller (RNC).

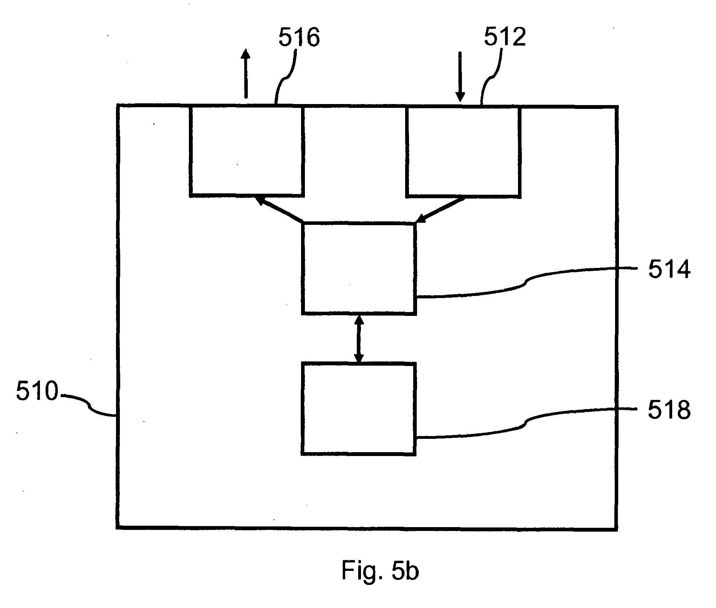

Referring to Fig. 5b, a second node 510 of a second telecommunications network for communicating towards a first node 500 of a first telecommunications network will be described in the following.

The second node 510 comprises a receiving unit 512 adapted for receiving a group identifier having being dynamically assigned to at least one circuit usable by the first node during communicating and a storing unit 518 adapted for storing the received group identifier with respect to at least one circuit used during communicating.

The receiving unit 512 may be adapted for receiving information together with the group identifier.

The second node 510 may comprise an operating unit 514 adapted for operating on the received information and the received group identifier.

The operating unit 514 may at least partially part of a processor or a processing unit in which appropriate algorithms may be executed to perform the methods of communicating from a first node 500 of a first telecommunications network towards a second node 510 of a second telecommunications network and of communicating from a second node 510 of a second telecommunications network towards a first node 500 of a first telecommunications network according to exemplary embodiments of the invention as described above.

The second node 510 may comprise a sending unit 516 adapted for sending information, particularly a group identifier having been dynamically assigned to at least one circuit usable the second node during communicating.

The second node 510 may comprise a storing unit 518 adapted for storing data necessary during methods of communicating from a first node 500 of a first telecommunications network towards a second node 510 of a second telecommunications network and of communicating from a second node 510 of a second telecommunications network towards a first node 500 of a first telecommunications network according to exemplary embodiments of the invention as described above.

The second 510 may be adapted to execute methods of communicating from a first node 500 of a first telecommunications network towards a second node 510 of a second telecommunications network and of communicating from a second node 510 of a second telecommunications network towards a first node 500 of a first telecommunications network according to exemplary embodiments of the invention as described above.

In particular, the operating unit 514 may be adapted for dynamically assigning a group identifier to at least one circuit usable by the second node 510 during communicating and the sending unit 516 may be adapted for sending the group identifier towards the first node 500.

The second node 510 may be a call initiating node or a call recipient node.

The second node 510 may be adapted as a Mobile Switching Center Server (MSC-S), a Transit Switch Center, a Base Station Controller, a Gateway Mobile Switching Center Server (GMSC), a Media Gateway Control Function (MGCF), or a Radio Network Controller (RNC).

In the following, advantages of the teachings of the present application will be detailed:
Using the teachings of the present application, the enormous bulk of signaling will be eliminated which occurs in case of a single processor or board failure in a multi-processor based MSC / Gateway MSC / TSC / MGCF. A MSC / Gateway MSC / TSC / MGCF may be considered as Call Control Nodes CCN.

The teachings of the present application can be applied on the A- and Iu- interfaces of an MSC-S as well as between CCN nodes using ISUP, BICC or SIP protocols. It applies to TDM circuits as well as to logical circuits used to identify calls on an ATM or IP user plane.

Further, by using the teachings of the present application, overloading the receiving node by an avalanche of messages is prevented.

In the following, a list of abbreviations used throughout the application will be provided :
- ACM: Address Complete Message
- BSSAP: Base Station Server Application Part
- CCN: Call Control Node
- CIC: Circuit Identification Code or Caller Identification Code
- COT: Continuity
- CPG: Call Progress
- CGR: Circuit Group Reset
- IAM: Initial Address Message
- GERAN: GSM EDGE Radio Access Network
- GI: Group Identifier
- IE: Information Element
- INF: Information
- ISUP: ISDN User Part
- TDM: Time Division Multiplexing

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

The invention comprises the examples E1 to E25.
E1. A method of communicating from a first node (500) of a first telecommunications network towards a second node (510) of a second telecommunications network, wherein the method is executed by the first node (500), the method comprising:
   - assigning (102) a circuit group identifier to at least one circuit usable by the first node (500) during communicating with the second node, and
   - sending (104) the circuit group identifier towards the second node.
E2. The method of example E1, wherein assigning comprises assigning the group identifier to at least one of a circuit and more circuits usable by the first node (500) during communicating.
E3. The method of example E1 and E2, further comprising receiving an acknowledgement that the group identifier has been stored by the second node (510) with respect to a circuit used during communicating.
E4. The method of any one of example E1 to E3, further comprising sending information together with the group identifier towards the second node (510).
E5. A method of communicating between a first node of a first telecommunications network and a second node of a second telecommunication network, comprising:
   the method of communicating from the first node towards the second node according to any of the examples E1 to E4, and
   a second method of communicating from the second node (510) towards the first node (500), wherein the second method is executed by the second node (510), the second method comprising:
      - receiving (112) a circuit group identifier having been assigned to at least one circuit usable by the first node (510) during communicating with the second node, and
      - storing (114) the received circuit group identifier with respect to at least one circuit used during communicating.
E6. The method of example E5, wherein the second method further comprises sending an acknowledgement that the group identifier has been stored by the second node (510) with respect to at least one circuit used during communicating.
E7. The method of example E5 or E6, wherein storing comprises storing an association between the group identifier and at least one circuit identifier for identifying the at least one circuit used during communicating.
E8. The method of any one of examples E5 to E7, wherein the second method further comprises receiving information together with the group identifier, and operating on the received information and the received group identifier.
E9. The method of example E8, wherein operating comprises scanning the circuits used by the second node (510) during communicating and releasing the circuits whose stored group identifier matches to the group identifier received together with the information.
E10. The method of any one of examples E7 to E9, wherein sending and receiving the group identifier comprises sending and receiving the group identifier together with the at least one circuit identifier.
E11. The method of any one of examples E1 to E10, wherein sending and receiving the group identifier comprises incorporating the group identifier into a message which comprises an Initial Address Message (IAM), a BSSMAP Assignment Request message, a RAB Assignment Request, an INVITE message or a first backward message.
E12. The method of example E11, wherein the first backward message comprises an Address Complete Message (ACM), a Call Progress Information (CPG), an Answer Message (ANM), a BSSMAP Assignment Complete message, a RAB Assignment Response message, a Trying message or a Session Progress message.
E13. The method of anyone of examples E4 or E8 to E12, wherein the information comprises a circuit resetting information, a circuit blocking information, or a circuit querying information.
E14. The method of example E7 to E13, wherein the circuit identifier comprises a Call Identifier (CI), a Circuit Identification Code (CIC), a Call Instance Code (CIC), a session name, or an Iu signaling connection identifier.
E15. The method of any one of examples E1 to E14, wherein the sending and the receiving is based on an ISDN User Part (ISUP) Protocol, a Base Station System Application Part (BSSAP) Protocol, a Bearer Independent Call Control (BICC) Protocol, a Radio Access Network Application Part (RANAP) Protocol, or a Session Initiation Protocol (SIP).
E16. A first node (500) of a first telecommunications network for communicating towards a second node (510) of a second telecommunications network, wherein the first node (500) comprises:
   - an assigning unit (504) adapted for assigning a circuit group identifier to at least one circuit usable by the first node (500) during communicating with the second node, and
   - a sending unit (506) adapted for sending the circuit group identifier towards the second node (510).
E17. The first node (500) of example E16, wherein the sending unit (506) is adapted for sending information together with the group identifier towards the second node (510).
E18. The first node (500) of example E16 or E17, wherein the first node (500) is adapted to execute a method according to any one of embodiments E1 to E4 and E10 to E15.
E19. The first node (500) of any one of examples E16 to E18, wherein the first node (500) is a call initiating node or a call recipient node.
E20. The first node (500) of any one of examples E16 to E19, wherein the first node (500) is adapted as a Mobile Switching Center Server (MSC-S), a Transit Switch Center, a Base Station Controller, a Gateway Mobile Switching Center Server (GMSC), a Media Gateway Control Function (MGCF), or a Radio Network Controller (RNC).
E21. A communication system comprising
   a first node according to any of the examples E16 to E20, and the second node (510) of the second telecommunications network for communicating towards the first node (500) of a first telecommunications network, wherein the second node (510) comprises:
   - a receiving unit (512) adapted for receiving a circuit group identifier having being dynamically assigned to at least one circuit usable by the first node during communicating with the second node, and
   - a storing unit (518) adapted for storing the received circuit group identifier with respect to at least one circuit used during communicating.
E22. The communication system of example E21, wherein the receiving unit (512) is adapted for receiving information together with the group identifier, and wherein the second node (510) further comprises
   - an operating unit (514) adapted for operating on the received information and the received group identifier.
E23. The communication system of example E21 or E22, wherein the communication system is adapted to execute a method according to any one of embodiments E5 to E15.
E24. The communication system of any one of examples E21 to E23, wherein the second node (510) is a call initiating node or a call recipient node.
E25. The communication system of any one of examples E21 to E24, wherein the second node is adapted as a Mobile Switching Center Server (MSC-S), a Transit Switch Center, a Base Station Controller, a Gateway Mobile Switching Center Server (GMSC), a Media Gateway Control Function (MGCF), or a Radio Network Controller (RNC).

According to another exemplary aspect of the present invention, a method for a Call Control Node of a telecommunication network may be provided. The method may comprise the step of sending a Group Identity towards another node handling circuits (TDM or IP or ATM based circuits) and being part of a call controlled by said Call Control Node, either because of having initiated a call towards said another node of said telecommunication network or because of a call being initiated by said another node. The method may comprise the step of detecting that a board or processor undergoes a restart and the step of sending a message indicating a reset towards said another node being accompanied by a Group Identity which identifies the board or processor undergoing restart.

According to another exemplary aspect of the invention, a method for a Node (e.g. MSC, TSC, BSC) handling circuits (TDM or IP or ATM based circuits) of a telecommunication network may be provided. The method may comprise the step of receiving a Group Identity from a Call Control Node controlling a call, either because of having initiated a call towards said another node of said telecommunication network or because of a call being initiated by said another node. The method may comprise the step of storing the Group Identity with respect to a seized circuit, the step of receiving a message indicating a reset from said another node being accompanied by a Group Identity, and the step of initiating a reset of those circuits whose stored group identity matches to the group identity received in the reset message.

## Claims

1. A method of communicating from a first node (500) of a first telecommunications network towards a second node (510) of a second telecommunications network, wherein the method is executed by the first node (500), the method comprising:
- assigning (102) a circuit group identifier to at least one circuit usable by the first node (500) during communicating with the second node, and
- sending (104) the circuit group identifier towards the second node.

2. The method of claim 1, wherein assigning comprises assigning the group identifier to at least one of a circuit and more circuits usable by the first node (500) during communicating.

3. The method of claim 1 and 2, further comprising receiving an acknowledgement that the group identifier has been stored by the second node (510) with respect to a circuit used during communicating.

4. The method of any one of claims 1 to 3, further comprising sending information together with the group identifier towards the second node (510).

5. A method of communicating between a first node of a first telecommunications network and a second node of a second telecommunication network, comprising:
the method of communicating from the first node towards the second node according to any of the claims 1 to 4, and
a second method of communicating from the second node (510) towards the first node (500), wherein the second method is executed by the second node (510), the second method comprising:
- receiving (112) a circuit group identifier having been assigned to at least one circuit usable by the first node (510) during communicating with the second node, and
- storing (114) the received circuit group identifier with respect to at least one circuit used during communicating.

6. The method of any one of claims 1 to 5, wherein sending and receiving the group identifier comprises incorporating the group identifier into a message which comprises an Initial Address Message, IAM, a BSSMAP Assignment Request message, a RAB Assignment Request, an INVITE message or a first backward message.

7. The method of claim 6, wherein the first backward message comprises an Address Complete Message, ACM, a Call Progress Information, CPG, an Answer Message, ANM, a BSSMAP Assignment Complete message, a RAB Assignment Response message, a Trying message or a Session Progress message.

8. The method of any one of claims 1 to 7, wherein the sending and the receiving is based on an ISDN User Part, ISUP, Protocol, a Base Station System Application Part, BSSAP, Protocol, a Bearer Independent Call Control, BICC, Protocol, a Radio Access Network Application Part, RANAP, Protocol, or a Session Initiation Protocol, SIP.

9. A first node (500) of a first telecommunications network for communicating towards a second node (510) of a second telecommunications network, wherein the first node (500) comprises:
- an assigning unit (504) adapted for assigning a circuit group identifier to at least one circuit usable by the first node (500) during communicating with the second node, and
- a sending unit (506) adapted for sending the circuit group identifier towards the second node (510).

10. The first node (500) of claim 9, wherein the sending unit (506) is adapted for sending information together with the group identifier towards the second node (510).

11. The first node (500) of claim 9 or 10, wherein the first node (500) is adapted to execute a method according to any one of claims 1 to 4 and 10 to 15.

12. The first node (500) of any one of claims 9 to 11, wherein the first node (500) is a call initiating node or a call recipient node.

13. The first node (500) of any one of claims of 9 to 12, wherein the first node (500) is adapted as a Mobile Switching Center Server, MSC-S, a Transit Switch Center, a Base Station Controller, a Gateway Mobile Switching Center Server, GMSC, a Media Gateway Control Function, MGCF, or a Radio Network Controller, RNC.

14. A communication system comprising
a first node according to any of the claims 9 to 13, and
the second node (510) of the second telecommunications network for communicating towards the first node (500) of a first telecommunications network, wherein the second node (510) comprises:
- a receiving unit (512) adapted for receiving a circuit group identifier having being dynamically assigned to at least one circuit usable by the first node during communicating with the second node, and
- a storing unit (518) adapted for storing the received circuit group identifier with respect to at least one circuit used during communicating.

15. The communication system of claim 14, wherein the communication system is adapted to execute a method according to any one of claims 5 to 8.

## Patentansprüche

1. Verfahren zur Kommunikation von einem ersten Knoten (500) eines ersten Telekommunikationsnetzes zu einem zweiten Knoten (510) eines zweiten Telekommunikationsnetzes, wobei das Verfahren durch den ersten Knoten (500) ausgeführt wird, und das Verfahren umfasst:
- Zuordnen (102) einer Schaltungsgruppenkennung zu mindestens einer Schaltung, die durch den ersten Knoten (500) während der Kommunikation mit dem zweiten Knoten verwendet werden kann, und
- Senden (104) der Schaltungsgruppenkennung zum zweiten Knoten.

2. Verfahren nach Anspruch 1, wobei das Zuordnen ein Zuordnen der Gruppenkennung zu mindestens einer von einer Schaltung und mehreren Schaltungen umfasst, die durch den ersten Knoten (500) während der Kommunikation verwendet werden können.

3. Verfahren nach Anspruch 1 und 2, ferner umfassend ein Empfangen einer Bestätigung, dass die Gruppenkennung in Bezug auf eine Schaltung, die während der Kommunikation verwendet wird, durch den zweiten Knoten (510) gespeichert wurde.

4. Verfahren nach einem der Ansprüche 1 bis 3, ferner umfassend ein Senden von Informationen zusammen mit der Gruppenkennung zum zweiten Knoten (510).

5. Verfahren zur Kommunikation zwischen einem ersten Knoten eines ersten Telekommunikationsnetzes und einem zweiten Knoten eines zweiten Telekommunikationsnetzes, umfassend:
das Verfahren zur Kommunikation vom ersten Knoten zum zweiten Knoten nach einem der Ansprüche 1 bis 4, und
ein zweites Verfahren zur Kommunikation vom zweiten Knoten (510) zum ersten Knoten (500), wobei das zweite Verfahren durch den zweiten Knoten (510) ausgeführt wird, und das zweite Verfahren umfasst:
- Empfangen (112) einer Schaltungsgruppenkennung, die mindestens einer Schaltung zugeordnet wurde, die durch den ersten Knoten (510) während der Kommunikation mit dem zweiten Knoten verwendet werden kann, und
- Speichern (114) der empfangenen Schaltungsgruppenkennung in Bezug auf mindestens eine Schaltung, die während der Kommunikation verwendet werden kann.

6. Verfahren nach einem der Ansprüche 1 bis 5, wobei das Senden und Empfangen der Gruppenkennung ein Aufnehmen der Gruppenkennung in eine Nachricht umfasst, die eine Initialisierungsnachricht, IAM, eine BSSMAP-Zuordnungsanforderungsnachricht, eine RAB-Zuordnungsanforderung, eine INVITE-Nachricht oder eine erste Rückwärtsnachricht umfasst.

7. Verfahren nach Anspruch 6, wobei die erste Rückwärtsnachricht eine Adresse-vollständig-Nachricht, ACM, eine Verbindungsaufbauinformation, CPG, eine Antwortnachricht, ANM, eine BSSMAP-Zuordnungvollständig-Nachricht, eine RAB-Zuordnungsantwortnachricht, eine Versuchen-Nachricht oder eine Sitzungsaufbaunachricht umfasst.

8. Verfahren nach einem der Ansprüche 1 bis 7, wobei das Senden und das Empfangen auf einem ISDN-Benutzerteil, ISUP,-Protokoll, einem Basisstationssystem-Anwendungsteil, BSSAP,-Protokoll, einem trägerunabhängigen Verbindungssteuerungs, BICC,-Protokoll, einem Funkzugangsnetz-Anwendungsteil, RANAP,-Protokoll oder einem Sitzungseinleitungsprotokoll, SIP, basiert.

9. Erster Knoten (500) eines ersten Telekommunikationsnetzes zum Kommunizieren zu einem zweiten Knoten (510) eines zweiten Telekommunikationsnetzes, wobei der erste Knoten (500) umfasst:
- einen Zuordnungseinheit (504), die zum Zuordnen einer Schaltungsgruppenkennung zu mindestens einer Schaltung ausgelegt ist, die durch den ersten Knoten (500) während der Kommunikation mit dem zweiten Knoten verwendet werden kann, und
- eine Sendeeinheit (506), die zum Senden der Schaltungsgruppenkennung zum zweiten Knoten (510) ausgelegt ist.

10. Erster Knoten (500) nach Anspruch 9, wobei die Sendeeinheit (506) zum Senden von Informationen zusammen mit der Gruppenkennung zum zweiten Knoten (510) ausgelegt ist.

11. Erster Knoten (500) nach Anspruch 9 oder 10, wobei der erste Knoten (500) so ausgelegt ist, dass er ein Verfahren nach einem der Ansprüche 1 bis 4 und 10 bis 15 ausführt.

12. Erster Knoten (500) nach einem der Ansprüche 9 bis 11, wobei der erste Knoten (500) ein Rufeinleitungsknoten oder ein Rufempfangsknoten ist.

13. Erster Knoten (500) nach einem der Ansprüche 9 bis 12, wobei der erste Knoten (500) als ein Mobilvermittlungseinrichtungsserver, MSC-S, eine Transitvermittlungseinrichtung, eine Basisstationssteuerung, ein Gateway-Mobilvermittlungseinrichtungsserver, GMSC, eine Media Gateway-Steuerfunktion, MGCF, oder eine Funknetzsteuerung, RNC, ausgelegt ist.

14. Kommunikationssystem, umfassend:
einen ersten Knoten nach einem der Ansprüche 9 bis 13, und
den zweiten Knoten (510) des zweiten Telekommunikationsnetzes zum Kommunizieren zum ersten Knoten (500) eines ersten Telekommunikationsnetzes, wobei der zweite Knoten (510) umfasst:
- eine Empfangseinheit (512), die zum Empfangen einer Schaltungsgruppenkennung ausgelegt ist, die mindestens einer Schaltung dynamisch zugeordnet wurde, die durch den ersten Knoten während der Kommunikation mit dem zweiten Knoten verwendet werden kann, und
- eine Speichereinheit (518), die so ausgelegt ist, dass sie die empfangene Schaltungsgruppenkennung in Bezug auf mindestens eine Schaltung speichert, die während der Kommunikation verwendet werden kann.

15. Kommunikationssystem nach Anspruch 14, wobei das Kommunikationssystem so ausgelegt ist, dass es ein Verfahren nach einem der Ansprüche 5 bis 8 ausführt.

## Revendications

1. Procédé de communication depuis un premier noeud (500) d'un premier réseau de télécommunications vers un second noeud (510) d'un second réseau de télécommunications, dans lequel le procédé est exécuté par le premier noeud (500), le procédé comprenant de :
- assigner (102) un identifiant de groupe de circuit à au moins un circuit utilisable par le premier noeud (500) pendant la communication avec le second noeud, et
- envoyer (104) l'identifiant de groupe de circuit vers le second noeud.

2. Procédé selon la revendication 1, dans lequel l'assignation comprend d'assigner l'identifiant de groupe à au moins un d'un circuit et plusieurs circuits utilisables par le premier noeud (500) pendant la communication.

3. Procédé selon les revendications 1 et 2, comprenant en outre de recevoir un accusé de réception que l'identifiant de groupe a été mémorisé par le second noeud (510) en ce qui concerne un circuit utilisé pendant la communication.

4. Procédé selon une quelconquedes revendications 1 à 3, comprenant en outre d'envoyer une information conjointement à l'identifiant de groupe vers le second noeud (510).

5. Procédé de communication entre un premier noeud d'un premier réseau de télécommunications et un second noeud d'un second réseau de télécommunications, comprenant :
le procédé de communication du premier noeud au second noeud selon une quelconque des revendications 1 à 4, et
un second procédé de communication du second noeud (510) au premier noeud (500), dans lequel le second procédé est exécuté par le second noeud (510), le second procédé comprenant de :
- recevoir (112) un identifiant de groupe de circuit ayant été assigné à au moins un circuit utilisable par le premier noeud (510) pendant la communication avec le second noeud, et
- mémoriser (114) l'identifiant de groupe de circuit reçu en ce qui concerne au moins un circuit utilisé pendant la communication.

6. Procédé selon une quelconque des revendications 1 à 5, dans lequel l'envoi et la réception de l'identifiant de groupe comprend d'incorporer l'identifiant de groupe dans un message qui comprend un message d'adresse initiale, IAM, un message de demande d'assignation BSSMAP, un message d'assignation RAB, un message INVITE ou un premier message inversé.

7. Procédé selon la revendication 6, dans lequel le premier message inversé comprend un message d'adresse complète, ACM, une information de progression d'appel, CPG, un message de réponse, ANM, un message d'assignation complète BSSMAP, un message de réponse d'assignation RAB, un message d'essai ou un message de progrès de session.

8. Procédé selon une quelconque des revendications 1 à 7, dans lequel l'envoi et la réception sont basés sur un protocole de sous-système d'utilisateur ISDN, ISUP, un protocole de sous-système d'application de système de station de base, BSSAP, un protocole de commande d'appel indépendant du support, BICC, un protocole de sous-système d'application de réseau d'accès radio, RANAP, ou un protocole d'amorce de session, SIP.

9. Premier noeud (500) d'un premier réseau de télécommunications pour communiquer vers un second noeud (510) d'un second réseau de télécommunications, dans lequel le premier noeud (500) comprend :
- un circuit d'assignation (504) adapté pour assigner un identifiant de groupe de circuit à au moins un circuit utilisable par le premier noeud (500) pendant la communication avec le second noeud, et
- une unité d'envoi (506) adaptée pour envoyer l'identifiant de groupe de circuit vers le second noeud (510).

10. Premier noeud (500) selon la revendication 9, dans lequel l'unité d'envoi (506) est adapté afin d'envoyer une information conjointement à l'identifiant de groupe vers le second noeud (510).

11. Premier noeud (500) selon les revendications 9 ou 10, dans lequel le premier noeud (500) est adapté afin de mettre en oeuvre un procédé selon une quelconque des revendications 1 à 4 et 10 à 15.

12. Premier noeud (500) selon une quelconque des revendications 9 à 11, dans lequel le premier noeud (500) est un noeud émetteur d'appel ou un noeud destinataire d'appel.

13. Premier noeud (500) selon une quelconque des revendications 9 à 12, dans lequel le premier noeud (500) est adapté comme serveur de centre de commutation pour les services mobiles, MSC-S, centre de commutation de transit, contrôleur de station de base, serveur de centre de commutation pour les services mobiles de passerelle, GMSC, fonction de commande de passerelle média, MGCF, ou contrôleur de radioréseau, RNC.

14. Système de communication comprenant :
unpremier noeud selon une quelconque des revendications 9 à 13, et le second noeud (510) du second réseau de télécommunications communiquant vers le premier noeud (500) d'un premier réseau de télécommunications, dans lequel le second noeud (510) comprend :
- une unité de réception (512) adaptée afin de recevoir un identifiant de groupe de circuit ayant été dynamiquement assigné à au moins un circuit utilisable par le premier noeud pendant la communication avec le second noeud, et
- une unité de mémorisation (518) adaptée afin de mémoriser l'identifiant de groupe de circuit reçu en ce qui concerne au moins un circuit utilisé pendant la communication.

15. Premier noeud (500) selon la revendication 14, dans lequel le système de communication est adapté afin de mettre en oeuvre un procédé selon une quelconque des revendications 5 à 8.
